# EUROPEAN PATENT APPLICATION

(11) **EP 4 472 275 A1**
(43) Date of publication of application: **04.12.2024**
(21) Application number: 23794953.2
(22) Date of filing: 31.03.2023
(51) Int. Cl.: H04W 24/10

(54) **CHANNEL STATE INFORMATION REPORTING METHOD, CHANNEL STATE INFORMATION RECEIVING METHOD, TERMINAL, BASE STATION AND STORAGE MEDIUM**

(30) Priority: 28.04.2022 CN 202210470675
(71) Applicant: ZTE Corporation, Shenzhen, Guangdong 518057 (CN)
(72) Inventor: LI, Yong, Shenzhen, Guangdong 518057 (CN); LI, Lun, Shenzhen, Guangdong 518057 (CN); ZHENG, Guozeng, Shenzhen, Guangdong 518057 (CN); WANG, Yuxin, Shenzhen, Guangdong 518057 (CN); LIU, Wenfeng, Shenzhen, Guangdong 518057 (CN); LU, Zhaohua, Shenzhen, Guangdong 518057 (CN); XIAO, Huahua, Shenzhen, Guangdong 518057 (CN)
(74) Representative: Aipex B.V.
(86) International application number: PCT/CN2023/085711
(87) International publication number: WO 2023/207518

(57) **Abstract**

Provided are a channel state information reporting method, a channel state information receiving method, a terminal, a base station and a storage medium. The channel state information reporting method includes acquiring configuration information of a channel state information reference signal and configuration information for reporting channel state information; receiving the channel state information reference signal according to the configuration information of the channel state information reference signal; and reporting the channel state information according to the configuration information for reporting the channel state information and based on a measurement of the channel state information reference signal.

## Description

### TECHNICAL FIELD

The present application relates to the field of wireless communication technology, for example, a channel state information reporting method, a channel state information receiving method, a terminal, a base station and a storage medium.

### BACKGROUND

Wireless communication technology has been developed to the 5th generation of communication technology. Both Long-Term Evolution (LTE) in the 4th generation of communication technology and New Radio (NR) in the 5th generation of wireless communication technology are based on orthogonal frequency-division multiplexing (OFDM) technology. In the OFDM technology, the minimum frequency domain unit is a subcarrier and the minimum time domain unit is an OFDM symbol. To facilitate the use of frequency domain resources, a resource block (RB) is defined, and one RB is defined as a particular number of consecutive subcarriers; and a bandwidth part (BWP) is also defined, and one BWP is defined as a particular number of consecutive RBs on a carrier. To facilitate the use of time domain resources, a slot is defined, and one slot is defined as a particular number of consecutive OFDM symbols. On this basis, channel state information is acquired and utilized in a wireless communication system, and the efficiency and accuracy of acquisition of the channel state information directly affect transmission efficiency in the wireless communication system. To improve data transmission efficiency, multi-antenna technology is generally used for transmitting data in the wireless communication system, and a reference signal is sent through multiple antenna ports on resources for carrying the reference signal. As the number of antenna ports for transmitting the reference signal increases, resource overheads for carrying the reference signal increase, reducing resources for transmitting data and reducing the data transmission efficiency of a wireless system. Additionally, a terminal needs to feed back channel state information with high accuracy, which inevitably requires a large amount of uplink resource overheads and increases a burden on uplink resources. The development of the wireless communication technology requires the optimization of a manner for acquiring the channel state information, so as to improve the accuracy of the channel state information and reduce resource overheads used for acquiring the channel state information.

### SUMMARY

A main object of embodiments of the present application is to provide a channel state information reporting method, a channel state information receiving method, a terminal, a base station and a storage medium, so as to solve at least the problem of so high an occupation rate of channel state information resources, improve the accuracy of channel state information, reduce resource overheads for acquiring channel state information, and improve data transmission efficiency. The embodiments of the present application provide a channel state information reporting method. The method includes: acquiring configuration information of a channel state information reference signal and configuration information for reporting channel state information; receiving the channel state information reference signal according to the configuration information of the channel state information reference signal; and reporting the channel state information according to the configuration information for reporting the channel state information and based on a measurement of the channel state information reference signal.

The embodiments of the present application further provide a channel state information receiving method. The method includes: sending configuration information of a channel state information reference signal and configuration information for reporting channel state information; sending the channel state information reference signal according to the configuration information of the channel state information reference signal; and receiving the channel state information reported according to the configuration information for reporting the channel state information and based on a measurement of the channel state information reference signal.

The embodiments of the present application further provide a terminal. The terminal includes one or more processors and a memory configured to store one or more programs. The one or more programs, when executed by the one or more processors, cause the one or more processors to perform the channel state information reporting method according to any one of the embodiments of the present application.

The embodiments of the present application further provide a base station. The base station includes one or more processors and a memory configured to store one or more programs. The one or more programs, when executed by the one or more processors, cause the one or more processors to perform the channel state information receiving method according to any one of the embodiments of the present application.

The embodiments of the present application further provide a computer-readable storage medium. The computer-readable storage medium is configured to store one or more programs, where the one or more programs are executed by one or more processors to implement the channel state information reporting method or the channel state information receiving method according to any one of the embodiments of the present application.

### BRIEF DESCRIPTION OF DRAWINGS

FIG. 1 is a flowchart of a channel state information reporting method according to an embodiment of the present application.
FIG. 2 is a flowchart of a channel state information receiving method according to an embodiment of the present application.
FIG. 3 is a structural diagram of a channel state information reporting apparatus according to an embodiment of the present application.
FIG. 4 is a structural diagram of a channel state information receiving apparatus according to an embodiment of the present application.
FIG. 5 is a structural diagram of a terminal according to an embodiment of the present application.
FIG. 6 is a structural diagram of a base station according to an embodiment of the present application.

### DETAILED DESCRIPTION

It is to be understood that the embodiments described herein are merely intended to explain the present application.

In the subsequent description, words for representing elements, such as "module", "component" and "unit" are merely used for facilitating the description of the present application and have no particular meanings in themselves. Therefore, "module", "component" and "unit" may be used in a mixed manner.

In a wireless communication system, channel state information is acquired and utilized in the manners below in a wireless communication system.

A base station sends a reference signal. A terminal measures the reference signal, determines channel state information from the base station to the terminal, and reports channel state information to the base station. The base station receives the channel state information reported by the terminal. The base station determines a data transmission policy according to a channel state represented by the received channel state information and transmits data to improve data transmission efficiency. The accuracy of the channel state represented by the channel state information affects the transmission policy of the base station and thus affects the data transmission efficiency.

The reference signal sent by the base station to the terminal is a downlink reference signal. A downlink reference signal for reporting the channel state information in an LTE system includes a cell-specific reference signal (CRS) and a channel state information reference signal (CSI-RS). A downlink reference signal for reporting the channel state information in an NR system includes the CSI-RS. The CSI-RS is carried by a CSI-RS resource, and the CSI-RS resource is composed of a code-division multiplexing (CDM) group, the CDM group is composed of radio resource elements, and CSI-RSs on a group of CSI-RS ports are multiplexed on the group of CSI-RS ports in a CDM manner.

The channel state information transmitted between the base station and the terminal includes a Channel Quality Indicator (CQI) for indicating a channel quality or includes a precoding matrix indicator (PMI) for indicating a precoding matrix applied to antennas of the base station. A CQI reporting format is wideband CQI reporting, that is, one channel quality is reported for a channel state information (CSI) reporting band, and the channel quality corresponds to the entire CSI reporting band. Another CQI reporting format is subband CQI reporting, that is, channel qualities are separately reported for subbands of the CSI reporting band, and one channel quality corresponds to one subband, that is, one channel quality is reported for each subband of the CSI reporting band. The subband is a frequency domain unit and defined as N consecutive RBs, where N is a positive integer. For ease of description, in the present application, the subband is referred to as a channel quality indicator subband or a CQI subband or a subband, and N is referred to as a size of the CQI subband or a CQI subband size or a subband size. A BWP is divided into subbands.

The CSI reporting band is defined by using a subset of a subband of the BWP. The CSI reporting band is a band channel state information on which needs to be reported.

A manner for determining the channel quality is determination according to strength of the reference signal received by the terminal. Another manner for determining the channel quality is determination according to a signal-to-noise ratio of the reference signal received. If the channel qualities on the CSI reporting band have no significant change, CQI reporting in the manner of wideband CQI reporting can reduce resource overheads for CQI reporting. If the channel qualities vary greatly in frequency domain, CQI reporting in the manner of subband CQI reporting can increase the accuracy of CQI reporting.

A PMI reporting format is wideband PMI reporting, that is, one PMI is reported for the CSI reporting band, and the PMI corresponds to the entire CSI reporting band. Another PMI reporting format is subband PMI reporting, that is, one PMI is reported for each subband of the CSI reporting band, or one PMI constituent is reported for each subband of the CSI reporting band. For example, the PMI consists of X1 and X2. A manner for reporting one PMI constituent for each subband of the CSI reporting band is to report one X1 for the entire band and report one X2 for each subband. Another manner is to report one X1 and one X2 for each subband.

Another PMI reporting format is that the reported PMI indicates R precoding matrixes for each subband, where R is a positive integer. In the sense of a frequency domain granularity for feeding back the precoding matrixes, R represents the number of precoding matrix subbands included in each subband or the number of precoding matrix subbands included in each CQI subband.

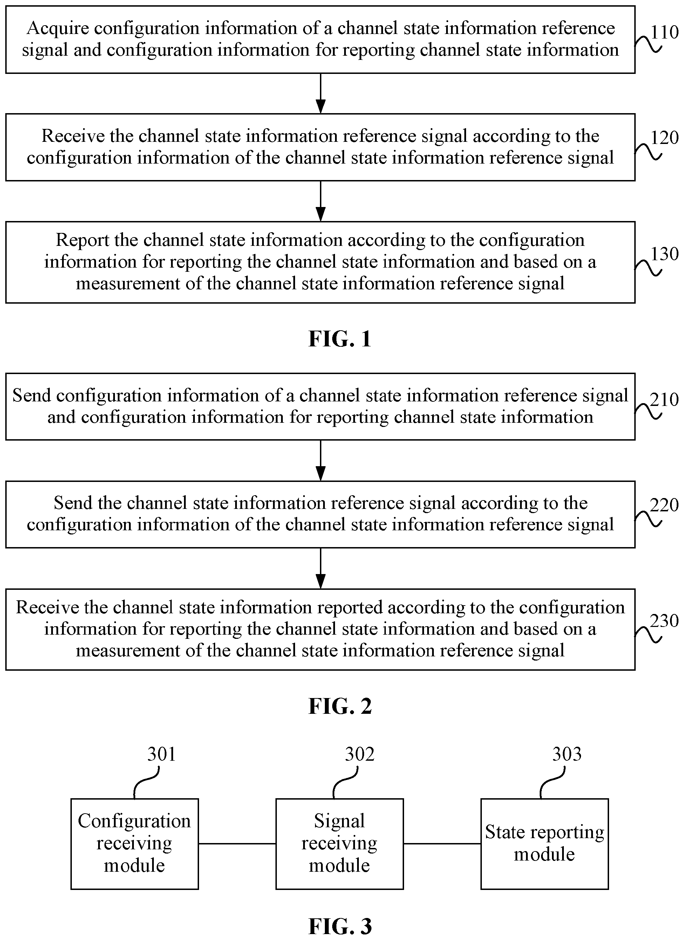

FIG. 1 is a flowchart of a channel state information reporting method according to an embodiment of the present application. The embodiment of the present application is applied to the case where a terminal reports channel state information to a base station. The method may be performed by a channel state information reporting apparatus which is generally integrated into the terminal. Referring to FIG. 1, the method according to the embodiment of the present application includes 110, 120 and 130.

In 110, configuration information of a channel state information reference signal and configuration information for reporting channel state information are acquired.

The configuration information of the channel state information reference signal may be information for configuring the terminal to receive the channel state information reference signal.

The configuration information of the channel state information reference signal may include a time-frequency resource occupied by the channel state information reference signal, the number of ports for the channel state information reference signal and the like. The configuration information for reporting the channel state information may be a parameter for configuring reported content of the channel state information. The configuration information for reporting the channel state information may include a channel state information quality indicator, a precoding matrix, a precoding matrix indicator, a channel coefficient, a channel coefficient indicator, reference signal received power, a codebook used by the precoding matrix and the like and may further include a manner for reporting the precoding matrix. For example, the precoding matrix is reported in an artificial intelligence manner.

In embodiments of the present application, the terminal may receive the configuration information for receiving the channel state information reference signal and the configuration information for reporting the channel state information, which are sent by the base station. The preceding two types of configuration information may be determined by the base station.

In 120, the channel state information reference signal is received according to the configuration information of the channel state information reference signal.

In embodiments of the present application, the terminal may receive the channel state information reference signal according to the configuration information of the channel state information reference signal. For example, the configuration information of the channel state information reference signal may be denoted as first configuration information, and the terminal may configure an appropriate time-frequency resource for a channel state information reference signal resource carrying the channel state information reference signal by using the first configuration information, or a system may configure an appropriate number of antenna ports by using the first configuration information, thereby saving resources for transmitting the channel state information reference signal. The configuration information for reporting the channel state information may be denoted as second configuration information, and the terminal may determine the reported content and a reporting granularity of the channel state information according to the second configuration information, thereby improving the accuracy of feedback of the channel state information.

In 130, the channel state information is reported according to the configuration information for reporting the channel state information and based on a measurement of the channel state information reference signal.

The terminal may acquire the measurement of the channel state information reference signal and report the channel state information according to the measurement and a configuration parameter for reporting the channel state information so that the accuracy of feedback of the channel state information can be improved, thereby saving resources occupied for transmitting the channel state information and improving a utilization rate of data transmission resources.

In the embodiments of the present application, the configuration information of the channel state information reference signal and the configuration information for reporting the channel state information are acquired, the channel state information reference signal is received according to the configuration information of the channel state information reference signal, and the channel state information is reported according to the configuration information for reporting the channel state information and the measurement of the channel state information reference signal so that the channel state information is accurately reported, the resources occupied for transmitting the channel state information can be reduced, and the utilization rate of data transmission resources can be improved.

Based on the preceding embodiments of the present application, the channel state information includes a precoding matrix, and the number of antenna ports to which the precoding matrix is applied is greater than the number of antenna ports for the channel state information reference signal, where a correspondence exists between the antenna ports for the channel state information reference signal and the antenna ports to which the precoding matrix is applied, and the correspondence is indicated through configuration information.

In embodiments of the present application, the reported channel state information may include the precoding matrix, and the number of antenna ports to which the precoding matrix is applied may be greater than the number of antenna ports for the channel state information reference signal. The terminal may estimate, according to the measurement of the channel state information reference signal with a smaller number of antenna ports, the precoding matrix applied to more antenna ports, and the channel state information reference signal with the same number of antenna ports as the precoding matrix is not required to be transmitted so that resources occupied for transmitting the channel state information reference signal can be reduced.

For example, the configuration information of the channel state information reference signal may indicate the number of antenna ports for the channel state information reference signal, the configuration information for reporting the channel state information may indicate the number of antenna ports to which the precoding matrix is applied, the number of antenna ports indicated in the configuration information of the channel state information reference signal may be less than the number of antenna ports indicated in the configuration information for reporting the channel state information. The number of antenna ports for the precoding matrix may be indicated by additional third configuration information.

In the embodiments of the present application, the correspondence may exist between the antenna ports to which the precoding matrix is applied and the antenna ports for the channel state information reference signal. For example, one antenna port for the channel state information reference signal may correspond to one or more antenna ports to which the precoding matrix is applied. Alternatively, the antenna ports to which the precoding matrix is applied are divided into multiple groups, and each group of antenna ports of the precoding matrix may correspond to one respective antenna port for the channel state information reference signal. The base station or the terminal may indicate that one group of antenna ports for the precoding matrix corresponds to one antenna port for the channel state information reference signal. The antenna ports for the channel state information reference signal may be divided into multiple groups, and the correspondence may be which group of antenna ports for the channel state information reference signal corresponds to one group of antenna ports to which the precoding matrix is applied. The correspondence may be determined by the terminal and may adapt to a channel scenario and vary with time, thereby improving the accuracy of feedback of the precoding matrix. In another embodiment, the correspondence may be determined in advance via a protocol. The manner of determination via the protocol can reduce resource overheads for the base station and the terminal to negotiate the correspondence and can reduce system complexity. In another embodiment, the correspondence may be configured by the base station.

A manner for indicating the correspondence may include a bit mapping manner. For example, each bit may correspond to one of the antenna ports to which the precoding matrix is applied, and each bit may indicate that the bit corresponds to one of the antenna ports for the channel state information reference signal. The bit mapping manner may include indicating an antenna port with a non-zero bit or indicating an antenna port with a zero-valued bit.

Based on the preceding embodiments of the present application, the correspondence indicates a manner for generating indication information of the precoding matrix.

In embodiments of the present application, the manner for generating the indication information of the precoding matrix includes that the terminal generates inference models or inference model parameters of the indication information of the precoding matrix, and different inference models or inference model parameters may be used for different mapping relationships. Different correspondences may be mapped to the inference models or inference model parameters, and the precoding matrix or the indication information of the precoding matrix may be inferred by using a machine learning algorithm according to a measurement result of the channel state information reference signal. However, machine learning algorithms based on different inference models or inference model parameters may have different inference results or different inference effects. One inference model or inference model parameter is applicable to this correspondence, another inference model or inference model parameter is applicable to another correspondence, and another inference model or inference model parameter is applicable to another correspondence. Therefore, the indication of the inference model or inference model parameter by the correspondence can reduce the system complexity and reduce the resource overheads for the negotiation between the base station and the terminal. For example, the inference model used by the terminal is an encoding module of an autoencoder, and the correspondence indicates the encoding module of the autoencoder selected by the terminal.

Based on the preceding embodiments of the present application, the precoding matrix is reported in the manner below.

Coefficients of X1 vectors are fed back, where the number of constituent elements of each of the X1 vectors is the number of antenna ports for the channel state information reference signal, X1 is an integer greater than or equal to 1, and the coefficients of the X1 vectors indicate the precoding matrix.

The precoding matrix may be indicated by the coefficients of the X1 vectors, each vector may include multiple constituent elements, and the number of constituent elements of each vector may be the number of antenna ports for the channel state information reference signal. That is, the number of the constituent elements of each vector are equal to the number of antenna ports for the channel state information reference signal. When the precoding matrix is fed back, the coefficients of the X1 vectors may be fed back, where X1 is an integer greater than or equal to 1.

Based on the preceding embodiments of the present application, the precoding matrix is reported in the manner below.

Coefficients of X2 vectors are fed back, where the number of constituent elements of each of the X2 vectors is the number of antenna ports to which the precoding matrix is applied, X2 is an integer greater than or equal to 1, and the coefficients of the X2 vectors indicate the precoding matrix. The precoding matrix may be indicated by the coefficients of the X2 vectors, each vector may include multiple constituent elements, and the number of constituent elements of each vector may be the number of antenna ports to which the precoding matrix is applied. That is, the number of the constituent elements of each vector are equal to the number of antenna ports to which the precoding matrix is applied. When the precoding matrix is fed back, the coefficients of the X2 vectors may be fed back, where X2 is an integer greater than or equal to 1.

In an example embodiment, the channel state information includes the precoding matrix, and the number of antenna ports to which the precoding matrix is applied is equal to the number of antenna ports for the channel state information reference signal, where the number is denoted as Nt, and Nt is an integer greater than or equal to 1.

In the embodiments of the present application, the number of antenna ports to which the precoding matrix is applied may be the same as the number of antenna ports for the channel state information reference signal, and the number may be denoted as Nt.

Based on the preceding embodiments of the present application, the precoding matrix is reported in the following manner: Np antenna ports are selected from Nt antenna ports for the channel state information reference signal, and channel states of the Np antenna ports are fed back, where Np is an integer greater than or equal to 1, and Np is less than Nt.

A part of antenna ports may be selected from the antenna ports and used for feeding back the channel states. The number of antenna ports selected is less than the number of antenna ports for the channel state information reference signal or the number of antenna ports to which the precoding matrix is applied so that resources occupied for feeding back the channel state information can be reduced. A base station side may restore the channel state information of all the antenna ports based on the channel states of the part of antenna ports so that overheads for feedback of the precoding matrix can be reduced, the system complexity can be reduced, and the accuracy of the precoding matrix can be improved. For example, the precoding matrix applied to Nt ports is restored using an interpolation algorithm. For another example, the precoding matrix applied to the Nt ports is restored using a fitting algorithm. For another example, the precoding matrix applied to the Nt ports is restored using a maximum likelihood estimation algorithm. For another example, the precoding matrix applied to the Nt ports is restored using a machine learning algorithm.

Based on the preceding embodiments of the present application, the Np antenna ports selected from the Nt antenna ports for the channel state information reference signal indicate a manner for the base station side to restore the precoding matrix applied to Nt antenna ports.

When the number of antenna ports selected by the terminal for feeding back the channel states is less than the number of antenna ports for the channel state information reference signal, the base station may be instructed to restore the channel state information of all the antenna ports according to channel state information of the part of antenna ports. A restoration manner may include that the base station restores the precoding matrix applied to the Nt ports according to the channel states of the Np antenna ports in multiple candidate manners. For example, the precoding matrix applied to the Nt ports is restored using the interpolation algorithm. For another example, the precoding matrix applied to the Nt ports is restored using the fitting algorithm. For another example, the precoding matrix applied to the Nt ports is restored using the maximum likelihood estimation algorithm. For another example, the precoding matrix applied to the Nt ports is restored using the machine learning algorithm. However, which manner is used is indicated by the terminal. The terminal selects a combination of Np ports from the Nt ports to indicate the manner for the base station to restore the precoding matrix applied to the Nt ports. For example, a first combination of the Np ports indicates a first manner for restoring the precoding matrix applied to the Nt ports, and a second combination of the Np ports indicates a second manner for restoring the precoding matrix applied to the Nt ports. In still another case, multiple candidate machine learning algorithms or modules may be used for restoring the precoding matrix applied to the Nt ports. The terminal indicates, by using the Np antenna ports selected from the Nt antenna ports for the channel state information reference signal, a machine learning algorithm or module selected for restoring the precoding matrix applied to the Nt ports, or the terminal indicates, by using a combination of the Np ports, a machine learning algorithm or module selected for restoring the precoding matrix applied to the Nt ports. For example, the first combination of the Np ports indicates a first machine learning algorithm or module for restoring the precoding matrix applied to the Nt ports, and the second combination of the Np ports indicates a second machine learning algorithm or module for restoring the precoding matrix applied to the Nt ports.

Based on the preceding embodiments of the present application, the channel states of the Np antenna ports are fed back in the manner below.

Coefficients of X1 vectors are fed back, where the number of constituent elements of each of the X1 vectors is Np, and X1 is a positive integer.

In the embodiments of the present application, the channel states of the Np antenna ports may be fed back in a manner of feeding back the coefficients of the X1 vectors, where the number of constituent elements of each vector may be Np, and X1 is a positive integer. For example, the base station side restores the precoding matrix applied to the Nt ports by using the coefficients of the X1 vectors.

In an example embodiment, the antenna ports for the channel state information reference signal are divided into two parts, a first part of antenna ports is transmitted on the channel state information reference signal resource with non-zero power, and a second part of antenna ports is transmitted on the channel state information reference signal resource with zero power.

The antenna ports for the channel state information reference signal are divided into two parts, the first part of antenna ports is transmitted on the channel state information reference signal resource with non-zero power, and the second part of antenna ports is transmitted on the channel state information reference signal resource with zero power; or the channel state information reference signal is transmitted through the first part of antenna ports on the channel state information reference signal resource, and no channel state information reference signal is transmitted through the second part of antenna ports on the channel state information reference signal resource.

For example, the number of antenna ports for the channel state information reference signal is Nt, the Np antenna ports are transmitted on the channel state information reference signal resource with non-zero power, and the remaining (Nt-Np) antenna ports are transmitted on the channel state information reference signal resource with zero power; or the channel state information reference signal is transmitted through the Np antenna ports on the channel state information reference signal resource, and no channel state information reference signal is transmitted through the remaining (Nt-Np) antenna ports on the channel state information reference signal resource.

In an example embodiment, the antenna ports for the channel state information reference signal are divided into two parts, the first part of antenna ports occupies a time-frequency resource on the channel state information reference signal resource, and the second part of antenna ports occupies no time-frequency resource on the channel state information reference signal resource.

The number of antenna ports for the channel state information reference signal is Nt, the Np antenna ports occupy time-frequency resources on the channel state information reference signal resource, and the remaining (Nt-Np) antenna ports occupy no time-frequency resources on the channel state information reference signal resource.

Based on the preceding embodiments of the present application, the channel state information is reported in the manner below.

According to a measurement of the channel state information reference signal transmitted through the first part of antenna ports, the precoding matrix is fed back which is applied to antenna ports the number of which is equal to the number of antenna ports for the channel state information reference signal.

In the embodiments of the present application, the number of antenna ports for the channel state information reference signal is Nt, the Np antenna ports occupy time-frequency resources on the channel state information reference signal resource, and the remaining (Nt-Np) antenna ports occupy no time-frequency resources on the channel state information reference signal resource. The terminal feeds back, according to the measurement of the channel state information reference signal transmitted through the Np antenna ports, the precoding matrix applied to the number Nt of antenna ports.

Based on the preceding embodiments of the present application, the antenna ports are indicated by the base station in at least one of the manners below.

An index number of the first part of antenna ports is indicated by the base station; an index number of the second part of antenna ports is indicated by the base station; a mapping relationship between the first part of antenna ports and the antenna ports to which the precoding matrix is applied is indicated by the base station; or a mapping relationship between the second part of antenna ports and the antenna ports to which the precoding matrix is applied is indicated by the base station.

In the embodiments of the present application, the base station indicates the index number of the first part of antenna ports, the base station indicates the index number of the second part of antenna ports, the base station indicates the mapping relationship between the first part of antenna ports and the antenna ports to which the precoding matrix is applied, or the base station indicates the mapping relationship between the second part of antenna ports and the antenna ports to which the precoding matrix is applied.

In an example embodiment, the channel state information includes the precoding matrix, and the number of antenna ports to which the precoding matrix is applied is less than the number of antenna ports for the channel state information reference signal.

The number of antenna ports for the channel state information reference signal is Np, and the number of antenna ports to which the precoding matrix is applied is Nt, where Np is greater than Nt. The terminal reports the precoding matrix. The number of antenna ports to which the precoding matrix reported by the terminal is applied is less than the number of antenna ports for the channel state information reference signal so that resource overheads for reporting are reduced, the system complexity is reduced, and the accuracy of the reported precoding matrix is improved.

Based on the preceding embodiments of the present application, the antenna ports to which the precoding matrix is applied are indicated by the base station from the antenna ports for the channel state information reference signal.

When the number of antenna ports to which the precoding matrix is applied is less than the number of antenna ports for the channel state information reference signal, the base station may indicate the antenna ports for the precoding matrix from the antenna ports for the channel state information reference signal.

For example, the number of antenna ports for the channel state information reference signal is Np, and the number of antenna ports to which the precoding matrix is applied is Nt, where Np is greater than Nt. The terminal reports the precoding matrix. The base station indicates Nt antenna ports from Np antenna ports for the channel state information reference signal, where the Nt antenna ports correspond to Nt antenna ports to which the precoding matrix is applied. That is, the base station flexibly arranges Nt ports among Np ports for the channel state information reference signal to correspond to the precoding matrix, thereby improving the accuracy of the precoding matrix and reducing complexity of determination of the Nt ports.

Based on the preceding embodiments of the present application, the antenna ports to which the precoding matrix is applied are indicated by the terminal from the antenna ports for the channel state information reference signal.

In the embodiments of the present application, the number of antenna ports for the channel state information reference signal is Np, and the number of antenna ports to which the precoding matrix is applied is Nt, where Np is greater than Nt. The terminal reports the precoding matrix. The terminal indicates the Nt antenna ports from the Np antenna ports for the channel state information reference signal, where the Nt antenna ports correspond to the Nt antenna ports to which the precoding matrix is applied. That is, the terminal flexibly selects the Nt ports from the Np ports for the channel state information reference signal according to a channel condition to correspond to the precoding matrix, thereby improving the accuracy of the precoding matrix and reducing the complexity of determination of the Nt ports.

In an example embodiment, the channel state information includes the precoding matrix generated by mapping a vector matrix A, where the vector matrix A is formed by first coefficients in combination with a first group of vectors and a second group of vectors.

The precoding matrix may be fed back in the channel state information, the precoding matrix may be generated by mapping the vector matrix A, and the coefficients of the vector matrix A may be generated through a combination of the first group of vectors and the second group of vectors. Based on the preceding embodiments of the present application, the first group of vectors and the second group of vectors each include at least one vector, and the vectors in the first group of vectors have the same number of constituent elements and/or the vectors in the second group of vectors have the same number of constituent elements.

The first group of vectors or the second group of vectors constituting the vector matrix A may be composed of multiple vectors. For the first group of vectors or the second group of vectors, the vectors include the same number of constituent elements. For example, the vectors in the first group of vectors have the same number of constituent elements, the vectors in the second group of vectors have the same number of constituent elements, or vectors in the first group of vectors and the second group of vectors have the same number of constituent elements.

Based on the preceding embodiments of the present application, the number is determined in at least one of the following manners: being indicated by the base station or being selected by the terminal.

In the embodiments of the present application, the number of constituent elements of each vector in the first group of vectors and/or the second group of vectors may be indicated by the base station or selected by the terminal.

For example, the first group of vectors includes M1 vectors; each vector in the first group of vectors has the same number K1 of constituent elements; and the base station indicates the number K1 of constituent elements, where M1 and K1 are each an integer greater than or equal to 1.

For example, the first group of vectors includes a vector 0, a vector 1, a vector 2, ... and a vector M1-1; the number of constituent elements of the vector 0 is K1, the number of constituent elements of the vector 1 is K1, the number of constituent elements of the vector 2 is K1, ..., and the number of constituent elements of the vector M1-1 is K1; and the number K1 of constituent elements is indicated by the base station. The base station may directly indicate the number of constituent elements. For example, the number K1 of constituent elements is given via configuration information or signaling. The base station may indirectly indicate or imply the number of constituent elements. M1 and K1 are positive integers.

In another embodiment, the number is indicated by the base station in the following manner: the number is a product of a second coefficient indicated by the base station and the number of antenna ports for the channel state information reference signal.

The base station indicates a second coefficient a, where the number K1 of constituent elements for the first group of vectors is a product of the number of antenna ports for the channel state information reference signal and *a*, and *a* is a positive number. In this manner, the base station can adjust the number of constituent elements without enumerating all candidate values of the number of constituent elements and establish a relationship between the number of constituent elements and the number of antenna ports for the channel state information reference signal, thereby increasing system flexibility, reducing the system complexity, and improving system performance. For example, the first group of vectors includes M1 vectors; each vector in the first group of vectors has the same number K1 of constituent elements; and the terminal selects the number K1 of constituent elements, where M1 and K1 are each an integer greater than or equal to 1.

The candidate values of the number K1 of constituent elements are preset via a protocol, and the terminal selects the number K1 of constituent elements from the candidate values. For another example, the base station sets the candidate values of the number K1 of constituent elements, and the terminal selects the number K1 of constituent elements from the candidate values. For another example, the candidate values of the number K1 of constituent elements may be explicitly set via the protocol or by the base station or implicitly set. For example, candidate values of the second coefficient a are set via a protocol or by the base station, and the terminal selects the second coefficient a from the candidate values, where the number K1 of constituent elements is the product of the number of antenna ports for the channel state information reference signal and the coefficient a, and a is a positive number.

In another example embodiment, the number K1 of constituent elements is selected by the terminal in the following manner: the number K1 of constituent elements is selected by the terminal from the candidate values set by the base station.

In another example embodiment, the number K1 of constituent elements is selected by the terminal in the following manner: the terminal selects the second coefficient a from the candidate values of the second coefficient *a*, where the number K 1 of constituent elements is the product of the number of antenna ports for the channel state information reference signal and the coefficient *a*, and *a* is a positive number.

The number for each vector in the second group of vectors is determined in the same manner as that for the first group of vectors.

In an embodiment, the second group of vectors includes M2 vectors; each vector in the second group of vectors has the same number K2 of constituent elements; and the base station indicates the number K2 of constituent elements.

For example, the second group of vectors includes a vector 0, a vector 1, a vector 2, ... and a vector M2-1; the number of constituent elements of the vector 0 is K2, the number of constituent elements of the vector 1 is K2, the number of constituent elements of the vector 2 is K2, ..., and the number of constituent elements of the vector M2-1 is K2; and the number K2 of constituent elements is indicated by the base station. The base station may directly indicate the number of constituent elements. For example, the number K2 of constituent elements is given via configuration information or signaling. The base station may indirectly indicate or imply the number of constituent elements. M2 and K2 are positive integers.

In an embodiment, the number K2 of constituent elements for the second group of vectors is indicated by the base station in the following manner: the base station indicates a third coefficient b, where the number K2 of constituent elements for the second group of vectors is a product of the number of the precoding matrix and the coefficient b, and *b* is a positive number.

In this manner, the base station can adjust the number of constituent elements without enumerating all candidate values of the number of constituent elements and establish a relationship between the number of constituent elements and the number of the precoding matrix, thereby increasing the system flexibility, reducing the system complexity, and improving the system performance.

In an embodiment, the second group of vectors includes M2 vectors; a second vector in the second group of vectors has the number K2 of constituent elements; and the terminal selects the number K2 of constituent elements.

For example, the candidate values of the number K2 of constituent elements are preset via a protocol, and the terminal selects the number K2 of constituent elements from the candidate values. For another example, the base station sets the candidate values of the number K2 of constituent elements, and the terminal selects the number K2 of constituent elements from the candidate values. For another example, the candidate values of the number K2 of constituent elements may be explicitly set via the protocol or by the base station or implicitly set. For example, candidate values of the third coefficient b are set via a protocol or by the base station, and the terminal selects the third coefficient b from the candidate values, where the number K2 of constituent elements is the product of the number of the precoding matrix and the coefficient b, and b is a positive number. In an embodiment, the number K2 of constituent elements is selected by the terminal in the following manner: the number K2 of constituent elements is selected by the terminal from the candidate values set by the base station.

In another embodiment, the number K2 of constituent elements is selected by the terminal in the following manner: the terminal selects the third coefficient *b* from the candidate values of the third coefficient *b,* where the number K2 of constituent elements is the product of the number of the precoding matrix and the coefficient *b,* and *b* is a positive number.

Based on the preceding embodiments of the present application, a mapping relationship exists between the constituent elements of each vector in the first group of vectors and the antenna ports for the channel state information reference signal, and the mapping relationship is determined by at least one of the methods below.

The mapping relationship is indicated by the base station. The mapping relationship is selected by the terminal. The mapping relationship is set via a protocol.

In the embodiments of the present application, the first group of vectors includes M1 vectors; the number of constituent elements of a first vector in the first group of vectors is K1; and the mapping relationship exists between the constituent elements of the first vector and the antenna ports for the channel state information reference signal, and the mapping relationship is determined by one of the methods below.

(1) The mapping relationship between the constituent elements of the first vector and the antenna ports for the channel state information reference signal is indicated by the base station. (2) The mapping relationship between the constituent elements of the first vector and the antenna ports for the channel state information reference signal is selected by the terminal. (3) The mapping relationship between the constituent elements of the first vector and the antenna ports for the channel state information reference signal is set via the protocol.

For example, the base station configures candidate mapping relationships, selects one mapping relationship between the constituent elements of the first vector and the antenna ports for the channel state information reference signal from the candidate mapping relationships for the terminal, and indicates the mapping relationship to the terminal.

For example, the candidate mapping relationships are configured via the protocol, one mapping relationship between the constituent elements of the first vector and the antenna ports for the channel state information reference signal is selected via the protocol from the candidate mapping relationships for the terminal, and the mapping relationship is indicated to the terminal via the protocol.

For example, the base station configures the candidate mapping relationships, and the terminal selects one mapping relationship between the constituent elements of the first vector and the antenna ports for the channel state information reference signal from the candidate mapping relationships.

For example, the candidate mapping relationships are configured via the protocol, and the terminal selects one mapping relationship between the constituent elements of the first vector and the antenna ports for the channel state information reference signal from the candidate mapping relationships and indicates the mapping relationship to the base station.

For example, the candidate mapping relationships are configured by the third coefficient, and the base station selects one mapping relationship between the constituent elements of the first vector and the antenna ports for the channel state information reference signal from the candidate mapping relationships for the terminal and indicates the mapping relationship to the terminal.

For example, the candidate mapping relationships are configured by the third coefficient, and the terminal selects one mapping relationship between the constituent elements of the first vector and the antenna ports for the channel state information reference signal from the candidate mapping relationships and indicates the mapping relationship to the base station.

A mapping relationship between the first group of vectors and the precoding matrix may also be applied to the second group of vectors.

Based on the preceding embodiments of the present application, a mapping relationship exists between the constituent elements of each vector in the second group of vectors and index numbers of the precoding matrix or frequency domain units to which the precoding matrix is applied, and the mapping relationship is determined by at least one of the methods below. The mapping relationship is indicated by the base station. The mapping relationship is selected by the terminal. The mapping relationship is set via a protocol.

In the embodiments of the present application, the second group of vectors includes M2 vectors; the number of constituent elements of the second vector in the second group of vectors is K2; and the mapping relationship exists between the constituent elements of the second vector and the index numbers of the precoding matrix or the frequency domain units to which the precoding matrix is applied, and the mapping relationship is determined by one of the methods below.

(1) The mapping relationship is indicated by the base station. (2) The mapping relationship is selected by the terminal. (3) The mapping relationship is set via the protocol.

For example, the base station configures candidate mapping relationships, selects one mapping relationship from the candidate mapping relationships for the terminal, and indicates the mapping relationship to the terminal.

For example, the candidate mapping relationships are configured via the protocol, one mapping relationship is selected via the protocol from the candidate mapping relationships for the terminal, and the mapping relationship is indicated via the protocol to the terminal.

For example, the base station configures the candidate mapping relationships, and the terminal selects one mapping relationship from the candidate mapping relationships.

For example, the candidate mapping relationships are configured via the protocol, and the terminal selects one mapping relationship from the candidate mapping relationships and indicates the mapping relationship to the base station.

For example, the candidate mapping relationships are configured, and the base station selects one mapping relationship from the candidate mapping relationships for the terminal and indicates the mapping relationship to the terminal.

For example, the candidate mapping relationships are configured, and the terminal selects one mapping relationship from the candidate mapping relationships and indicates the mapping relationship to the base station.

Based on the preceding embodiments of the present application, the number of constituent elements of each vector in the first group of vectors is determined by the number of antenna ports for the channel state information reference signal, and the number of constituent elements of each vector in the second group of vectors is determined by the number of the precoding matrix.

The precoding matrix is generated by mapping the matrix A, where the matrix A is formed by the first coefficients in combination with the first group of vectors and the second group of vectors, the number K1 of constituent elements of the vector in the first group of vectors is determined according to the number of antenna ports for the channel state information reference signal, and the number K2 of constituent elements of the vector in the second group of vectors is determined according to the number of the precoding matrix.

In an example embodiment, the precoding matrix is reported in the manner below.

A first part of coefficients of the first coefficients is reported, where a correspondence exists between the first part of coefficients and the first group of vectors or the second group of vectors. In the embodiments of the present application, the first coefficients are the coefficients of the example matrix A, the first part of coefficients is a part of the first coefficients, and the correspondence may exist between the first part of coefficients and the first group of vectors or the second group of vectors. For example, the correspondence between the first part of coefficients and the first group of vectors may include at least one of the correspondences below.

(1) The first part of coefficients is a coefficient of a vector with an odd index number in the first group of vectors. (2) The first part of coefficients is a coefficient of a vector with an even index number in the first group of vectors. (3) The first part of coefficients is divided into a first group of coefficients and a second group of coefficients, the first group of coefficients is a coefficient of a vector with an odd index number in the first group of vectors, and the second group of coefficients is a coefficient of a vector with an even index number in the first group of vectors, where the odd index number corresponding to the first group of coefficients is greater than the even index number corresponding to the second group of coefficients, or the odd index number corresponding to the first group of coefficients is less than the even index number corresponding to the second group of coefficients. (4) The first part of coefficients has the following characteristic: a coefficient of a vector in the first group of vectors and corresponding to one index number of every N1 index numbers in an ascending order of index numbers, where N1 is an integer greater than 1. (5) The base station indicates a starting index number of vectors in the first group of vectors and corresponding to the first part of coefficients. (6) The terminal feeds back a starting index number of vectors in the first group of vectors and corresponding to the first part of coefficients.

(7) The base station determines the number of vectors in the first group of vectors and corresponding to the first part of coefficients, and the terminal determines a starting index number of the corresponding vectors. (8) The base station determines the number of vectors in the first group of vectors and corresponding to the first part of coefficients, and the terminal determines a starting index number of the corresponding vectors and an offset between adjacent index numbers of the corresponding vectors. (9) The base station determines the number of vectors in the first group of vectors and corresponding to the first part of coefficients and an offset between adjacent index numbers of the corresponding vectors, and the terminal determines a starting index number of the corresponding vectors. (10) The base station determines a starting index number of vectors in the first group of vectors and corresponding to the first part of coefficients, and the terminal determines the number of corresponding vectors. (11) The base station determines a starting index number of vectors in the first group of vectors and corresponding to the first part of coefficients, and the terminal determines the number of corresponding vectors and an offset between adjacent index numbers of the corresponding vectors. (12) The base station determines a starting index number of vectors in the first group of vectors and corresponding to the first part of coefficients and an offset between adjacent index numbers of the corresponding vectors, and the terminal determines the number of corresponding vectors. (13) The base station determines an offset between adjacent index numbers of vectors in the first group of vectors and corresponding to the first part of coefficients, and the terminal determines a starting index number of the corresponding vectors. (14) The base station determines a starting index number of vectors in the first group of vectors and corresponding to the first part of coefficients, and the terminal determines the number of corresponding vectors. (15) The base station determines the number of vectors in the first group of vectors and corresponding to the first part of coefficients, and the terminal determines an offset between adjacent index numbers of the corresponding vectors. (16) The base station determines an offset between adjacent index numbers of vectors in the first group of vectors and corresponding to the first part of coefficients, and the terminal determines the number of corresponding vectors.

Similarly, the correspondence between the first part of coefficients and the second group of vectors may include at least one of the correspondences below.

(1) The first part of coefficients is a coefficient of a vector with an odd index number in the second group of vectors. (2) The first part of coefficients is a coefficient of a vector with an even index number in the second group of vectors. (3) The first part of coefficients is divided into a first group of coefficients and a second group of coefficients, the first group of coefficients is a coefficient of a vector with an odd index number in the second group of vectors, and the second group of coefficients is a coefficient of a vector with an even index number in the second group of vectors, where the odd index number corresponding to the first group of coefficients is greater than the even index number corresponding to the second group of coefficients, or the odd index number corresponding to the first group of coefficients is less than the even index number corresponding to the second group of coefficients. (4) The first part of coefficients has the following characteristic: a coefficient of a vector in the second group of vectors and corresponding to one index number of every N1 index numbers in an ascending order of index numbers, where N1 is an integer greater than 1. (5) The base station indicates a starting index number of vectors in the first group of vectors and corresponding to the first part of coefficients. (6) The terminal feeds back a starting index number of vectors in the second group of vectors and corresponding to the first part of coefficients.

(7) The base station determines the number of vectors in the second group of vectors and corresponding to the first part of coefficients, and the terminal determines a starting index number of the corresponding vectors. (8) The base station determines the number of vectors in the second group of vectors and corresponding to the first part of coefficients, and the terminal determines a starting index number of the corresponding vectors and an offset between adjacent index numbers of the corresponding vectors. (9) The base station determines the number of vectors in the second group of vectors and corresponding to the first part of coefficients and an offset between adjacent index numbers of the corresponding vectors, and the terminal determines a starting index number of the corresponding vectors. (10) The base station determines a starting index number of vectors in the second group of vectors and corresponding to the first part of coefficients, and the terminal determines the number of corresponding vectors. (11) The base station determines a starting index number of vectors in the second group of vectors and corresponding to the first part of coefficients, and the terminal determines the number of corresponding vectors and an offset between adjacent index numbers of the corresponding vectors. (12) The base station determines a starting index number of vectors in the second group of vectors and corresponding to the first part of coefficients and an offset between adjacent index numbers of the corresponding vectors, and the terminal determines the number of corresponding vectors. (13) The base station determines an offset between adjacent index numbers of vectors in the second group of vectors and corresponding to the first part of coefficients, and the terminal determines a starting index number of the corresponding vectors. (14) The base station determines a starting index number of vectors in the second group of vectors and corresponding to the first part of coefficients, and the terminal determines the number of corresponding vectors. (15) The base station determines the number of vectors in the second group of vectors and corresponding to the first part of coefficients, and the terminal determines an offset between adjacent index numbers of the corresponding vectors. (16) The base station determines an offset between adjacent index numbers of vectors in the second group of vectors and corresponding to the first part of coefficients, and the terminal determines the number of corresponding vectors.

In an example embodiment, the channel state information includes the precoding matrix, and correspondingly, the precoding matrix is reported in the manner below.

The first part of coefficients of the first coefficients is reported, where the first coefficients are divided into P groups of coefficients, the first part of coefficients includes at least one group of coefficients among the P groups of coefficients, and P is a positive integer.

In the embodiments of the present application, the first part of coefficients of the first coefficients constituting the precoding matrix may be reported to feed back the precoding matrix. The first coefficients are divided into P groups of coefficients, one or more groups of coefficients are used as the first part of coefficients, and the first part of coefficients may be fed back to report the first part of coefficients, where P is a positive integer.

Based on the preceding embodiments of the present application, the first part of coefficients is indicated by the base station or the terminal in groups, which includes indicating an index number of a group corresponding to the first part of coefficients.

The first coefficients may be divided into multiple groups of coefficients, and the base station or the terminal may indicate an index number of each group of coefficients constituting the first part of coefficients to determine the first part of coefficients.

Based on the preceding embodiments of the present application, the first part of coefficients is indicated by the base station or the terminal in groups, which includes indicating the number of groups in the first part of coefficients.

The first coefficients are divided into the multiple groups of coefficients, and the base station or the terminal may indicate the number of groups constituting the first part of coefficients to determine the first part of coefficients.

FIG. 2 is a flowchart of a channel state information receiving method according to an embodiment of the present application. The embodiment of the present application is applied to the case where a base station receives channel state information reported by a terminal. The method may be performed by a channel state information receiving apparatus which is generally integrated into the base station. Referring to FIG. 2, the method according to the embodiment of the present application includes 210, 220 and 230.

In 210, configuration information of a channel state information reference signal and configuration information for reporting channel state information are sent.

In embodiments of the present application, the base station may send the configuration information of the channel state information reference signal to configure the terminal to receive the channel state information reference signal, and the base station may further send the configuration information for reporting the channel state information to configure the terminal to feed back content of the channel state information.

In 220, the channel state information reference signal is sent according to the configuration information of the channel state information reference signal.

The base station may send the configuration information for configuring the channel state information reference signal for the terminal so that the terminal may receive the channel state information reference signal according to the configuration information. For example, the configuration information of the channel state information reference signal may be denoted as first configuration information, and the terminal may configure an appropriate time-frequency resource for a channel state information reference signal resource carrying the channel state information reference signal by using the first configuration information, or a system may configure an appropriate number of antenna ports by using the first configuration information, thereby saving resources for transmitting the channel state information reference signal. The configuration information for reporting the channel state information may be denoted as second configuration information, and the terminal may determine reported content and a reporting granularity of the channel state information according to the second configuration information, thereby improving the accuracy of feedback of the channel state information.

In 230, the channel state information is received which is reported according to the configuration information for reporting the channel state information and based on a measurement of the channel state information reference signal.

The base station may receive the channel state information reported by the terminal according to the configuration information for reporting the channel state information and based on the measurement of the channel state information reference signal.

In the embodiments of the present application, the configuration information of the channel state information reference signal and the configuration information for reporting the channel state information are sent, the channel state information reference signal is sent according to the configuration information of the channel state information reference signal, and the channel state information is received which is reported according to the configuration information for reporting the channel state information and the measurement of the channel state information reference signal so that the channel state information is accurately reported, resources occupied for transmitting the channel state information can be reduced, and a utilization rate of data transmission resources can be improved.

Based on the preceding embodiments of the present application, the channel state information includes a precoding matrix, and the number of antenna ports to which the precoding matrix is applied is greater than the number of antenna ports for the channel state information reference signal, where a correspondence exists between the antenna ports for the channel state information reference signal and the antenna ports to which the precoding matrix is applied, and the correspondence is indicated through configuration information.

Based on the preceding embodiments of the present application, the correspondence indicates a manner for generating indication information of the precoding matrix.

Based on the preceding embodiments of the present application, the reported precoding matrix is received in the manner below.

Feedback of coefficients of X1 vectors is received, where the number of constituent elements of each of the X1 vectors is the number of antenna ports for the channel state information reference signal, X1 is an integer greater than or equal to 1, and the coefficients of the X1 vectors indicate the precoding matrix.

Based on the preceding embodiments of the present application, the reported precoding matrix is received in the manner below.

Feedback of coefficients of X2 vectors is received, where the number of constituent elements of each of the X2 vectors is the number of antenna ports to which the precoding matrix is applied, X2 is an integer greater than or equal to 1, and the coefficients of the X2 vectors indicate the precoding matrix.

Based on the preceding embodiments of the present application, the channel state information includes the precoding matrix, and the number of antenna ports to which the precoding matrix is applied is equal to the number of antenna ports for the channel state information reference signal, where the number is denoted as Nt, and Nt is an integer greater than or equal to 1.

Based on the preceding embodiments of the present application, the reported precoding matrix is received in the manner below.

Feedback of channel states of Np antenna ports is received, where the Np antenna ports are selected by the terminal from Nt antenna ports for the channel state information reference signal, Np is an integer greater than or equal to 1, and Np is less than Nt.

Based on the preceding embodiments of the present application, the method further includes restoring, based on the channel states of the Np antenna ports, the precoding matrix applied to Nt antenna ports.

Based on the preceding embodiments of the present application, the feedback of the channel states of the Np antenna ports is received in the manner below.

Feedback of coefficients of X1 vectors is received, where the number of constituent elements of each of the X1 vectors is Np, and X1 is a positive integer.

Based on the preceding embodiments of the present application, the antenna ports for the channel state information reference signal are divided into two parts, a first part of antenna ports is transmitted on the channel state information reference signal resource with non-zero power, and a second part of antenna ports is transmitted on the channel state information reference signal resource with zero power.

Based on the preceding embodiments of the present application, the antenna ports for the channel state information reference signal are divided into two parts, the first part of antenna ports occupies a time-frequency resource on the channel state information reference signal resource, and the second part of antenna ports occupies no time-frequency resource on the channel state information reference signal resource.

Based on the preceding embodiments of the present application, the reported channel state information is received in the manner below.

The precoding matrix is received which is applied to antenna ports the number of which is equal to the number of antennas for the channel state information reference signal and is fed back according to a measurement of the channel state information reference signal transmitted through the first part of antenna ports.

Based on the preceding embodiments of the present application, the antenna ports are indicated in at least one of the manners below.

An index number of the first part of antenna ports is indicated; an index number of the second part of antenna ports is indicated; a mapping relationship between the first part of antenna ports and the antenna ports to which the precoding matrix is applied is indicated; or a mapping relationship between the second part of antenna ports and the antenna ports to which the precoding matrix is applied is indicated.

Based on the preceding embodiments of the present application, the channel state information includes the precoding matrix, and the number of antenna ports to which the precoding matrix is applied is less than the number of antenna ports for the channel state information reference signal. Based on the preceding embodiments of the present application, the antenna ports to which the precoding matrix is applied are indicated from the antenna ports for the channel state information reference signal.

Based on the preceding embodiments of the present application, the antenna ports to which the precoding matrix is applied are indicated by the terminal from the antenna ports for the channel state information reference signal.

Based on the preceding embodiments of the present application, the channel state information includes the precoding matrix generated by mapping a vector matrix A, where the vector matrix A is formed by first coefficients in combination with a first group of vectors and a second group of vectors.

Based on the preceding embodiments of the present application, the first group of vectors and the second group of vectors each include at least one vector, and the vectors in the first group of vectors have the same number of constituent elements and/or the vectors in the second group of vectors have the same number of constituent elements.

Based on the preceding embodiments of the present application, the number is determined in at least one of the following manners: being indicated by the base station or being selected by the terminal.

Based on the preceding embodiments of the present application, the number is indicated in the manner below.

The number is a product of a second coefficient indicated and the number of antenna ports for the channel state information reference signal.

Based on the preceding embodiments of the present application, the number is indicated by the terminal in at least one of the manners below.

The number is a value selected according to an indication of the terminal from candidate values set by the base station. The number is a product of a third coefficient indicated by the terminal and the number of antenna ports for the channel state information reference signal.

Based on the preceding embodiments of the present application, a mapping relationship exists between constituent elements of each vector in the first group of vectors and the antenna ports for the channel state information reference signal, and the mapping relationship is determined by at least one of the methods below. The mapping relationship is indicated by the base station. The mapping relationship is selected by the terminal. The mapping relationship is set via a protocol.

Based on the preceding embodiments of the present application, a mapping relationship exists between constituent elements of each vector in the second group of vectors and index numbers of the precoding matrix or frequency domain units to which the precoding matrix is applied, and the mapping relationship is determined by at least one of the methods below. The mapping relationship is indicated by the base station. The mapping relationship is selected by the terminal. The mapping relationship is set via a protocol.

Based on the preceding embodiments of the present application, the number of constituent elements of each vector in the first group of vectors is determined by the number of antenna ports for the channel state information reference signal, and the number of constituent elements of each vector in the second group of vectors is determined by the number of the precoding matrix. Based on the preceding embodiments of the present application, the reported precoding matrix is received in the manner below.

A reported first part of coefficients of the first coefficients is received, where a correspondence exists between the first part of coefficients and the first group of vectors or the second group of vectors.

Based on the preceding embodiments of the present application, the reported precoding matrix is received in the manner below.

The reported first part of coefficients of the first coefficients is received, where the first coefficients are divided into P groups of coefficients, the first part of coefficients includes at least one group of coefficients among the P groups of coefficients, and P is a positive integer.

Based on the preceding embodiments of the present application, the first part of coefficients is indicated by the base station or the terminal in groups, which includes indicating the number of groups corresponding to the first part of coefficients.

Based on the preceding embodiments of the present application, the first part of coefficients is indicated by the base station or the terminal in groups, which includes indicating an index number of a group corresponding to the first part of coefficients.

FIG. 3 is a structural diagram of a channel state information reporting apparatus according to an embodiment of the present application. The apparatus may perform the channel state information reporting method according to any embodiment of the present application and has function modules and beneficial effects corresponding to the performed method. The apparatus may be implemented by software and/or hardware. As shown in FIG. 3, the apparatus according to the embodiment of the present application includes a configuration receiving module 301, a signal receiving module 302 and a state reporting module 303.

The configuration receiving module 301 is configured to acquire configuration information of a channel state information reference signal and configuration information for reporting channel state information.

The signal receiving module 302 is configured to receive the channel state information reference signal according to the configuration information of the channel state information reference signal. The state reporting module 303 is configured to report the channel state information according to the configuration information for reporting the channel state information and based on a measurement of the channel state information reference signal.

In embodiments of the present application, the configuration receiving module 301 acquires the configuration information of the channel state information reference signal and the configuration information for reporting the channel state information, the signal receiving module 302 receives the channel state information reference signal according to the configuration information of the channel state information reference signal, and the state reporting module 303 reports the channel state information according to the configuration information for reporting the channel state information and the measurement of the channel state information reference signal so that the channel state information is accurately reported, resources occupied for transmitting the channel state information can be reduced, and a utilization rate of data transmission resources can be improved.

Based on the preceding embodiments of the present application, in the apparatus, the channel state information includes a precoding matrix, and the number of antenna ports to which the precoding matrix is applied is greater than the number of antenna ports for the channel state information reference signal, where a correspondence exists between the antenna ports for the channel state information reference signal and the antenna ports to which the precoding matrix is applied, and the correspondence is indicated through configuration information.

Based on the preceding embodiments of the present application, in the apparatus, the correspondence indicates a manner for generating indication information of the precoding matrix. Based on the preceding embodiments of the present application, the state reporting module 303 includes a precoding reporting unit configured to feed back coefficients of X1 vectors, where the number of constituent elements of each of the X1 vectors is the number of antenna ports for the channel state information reference signal, X1 is an integer greater than or equal to 1, and the coefficients of the X1 vectors indicate the precoding matrix.

Based on the preceding embodiments of the present application, the precoding reporting unit in the state reporting module 303 is configured to feed back coefficients of X2 vectors, where the number of constituent elements of each of the X2 vectors is the number of antenna ports to which the precoding matrix is applied, X2 is an integer greater than or equal to 1, and the coefficients of the X2 vectors indicate the precoding matrix.

Based on the preceding embodiments of the present application, in the apparatus, the channel state information includes the precoding matrix, and the number of antenna ports to which the precoding matrix is applied is equal to the number of antenna ports for the channel state information reference signal, where the number is denoted as Nt, and Nt is an integer greater than or equal to 1.

Based on the preceding embodiments of the present application, the precoding reporting unit in the state reporting module 303 is configured to select Np antenna ports from Nt antenna ports for the channel state information reference signal and feed back channel states of the Np antenna ports, where Np is an integer greater than or equal to 1, and Np is less than Nt.

Based on the preceding embodiments of the present application, in the apparatus, the Np antenna ports selected from the Nt antenna ports for the channel state information reference signal indicate a manner for a base station side to restore the precoding matrix applied to Nt antenna ports.

Based on the preceding embodiments of the present application, the precoding reporting unit in the state reporting module 303 is configured to feed back coefficients of X1 vectors, where the number of constituent elements of each of the X1 vectors is Np, and X1 is a positive integer.

Based on the preceding embodiments of the present application, in the apparatus, the antenna ports for the channel state information reference signal are divided into two parts, a first part of antenna ports is transmitted on a channel state information reference signal resource with non-zero power, and a second part of antenna ports is transmitted on the channel state information reference signal resource with zero power.

Based on the preceding embodiments of the present application, in the apparatus, the antenna ports for the channel state information reference signal are divided into two parts, the first part of antenna ports occupies a time-frequency resource on the channel state information reference signal resource, and the second part of antenna ports occupies no time-frequency resource on the channel state information reference signal resource.

Based on the preceding embodiments of the present application, the precoding reporting unit in the state reporting module 303 is configured to feed back, according to a measurement of the channel state information reference signal transmitted through the first part of antenna ports, the precoding matrix applied to antenna ports the number of which is equal to the number of antenna ports for the channel state information reference signal.

Based on the preceding embodiments of the present application, in the apparatus, the antenna ports are indicated by a base station in at least one of the manners below.

An index number of the first part of antenna ports is indicated by the base station; an index number of the second part of antenna ports is indicated by the base station; a mapping relationship between the first part of antenna ports and the antenna ports to which the precoding matrix is applied is indicated by the base station; or a mapping relationship between the second part of antenna ports and the antenna ports to which the precoding matrix is applied is indicated by the base station.

Based on the preceding embodiments of the present application, in the apparatus, the channel state information includes the precoding matrix, and the number of antenna ports to which the precoding matrix is applied is less than the number of antenna ports for the channel state information reference signal.

Based on the preceding embodiments of the present application, in the apparatus, the antenna ports to which the precoding matrix is applied are indicated by the base station from the antenna ports for the channel state information reference signal.

Based on the preceding embodiments of the present application, in the apparatus, the antenna ports to which the precoding matrix is applied are indicated by a terminal from the antenna ports for the channel state information reference signal.

Based on the preceding embodiments of the present application, in the apparatus, the channel state information includes the precoding matrix generated by mapping a vector matrix A, where the vector matrix A is formed by first coefficients in combination with a first group of vectors and a second group of vectors.

Based on the preceding embodiments of the present application, in the apparatus, the first group of vectors and the second group of vectors each include at least one vector, and the vectors in the first group of vectors have the same number of constituent elements and/or the vectors in the second group of vectors have the same number of constituent elements.

Based on the preceding embodiments of the present application, in the apparatus, the number is determined in at least one of the manners below.

The number is indicated by the base station or selected by the terminal.

Based on the preceding embodiments of the present application, in the apparatus, the number is indicated by the base station in the manner below.

The number is a product of a second coefficient indicated by the base station and the number of antenna ports for the channel state information reference signal.

Based on the preceding embodiments of the present application, in the apparatus, the number is indicated by the terminal in at least one of the manners below.

The number is a value selected according to an indication of the terminal from candidate values set by the base station. The number is a product of a third coefficient indicated by the terminal and the number of antenna ports for the channel state information reference signal.

Based on the preceding embodiments of the present application, in the apparatus, a mapping relationship exists between constituent elements of each vector in the first group of vectors and the antenna ports for the channel state information reference signal, and the mapping relationship is determined by at least one of the methods below.

The mapping relationship is indicated by the base station. The mapping relationship is selected by the terminal. The mapping relationship is set via a protocol.

Based on the preceding embodiments of the present application, a mapping relationship exists between constituent elements of each vector in the second group of vectors and index numbers of the precoding matrix or frequency domain units to which the precoding matrix is applied, and the mapping relationship is determined by at least one of the methods below.

The mapping relationship is indicated by the base station. The mapping relationship is selected by the terminal. The mapping relationship is set via a protocol.

Based on the preceding embodiments of the present application, the number of constituent elements of each vector in the first group of vectors is determined by the number of antenna ports for the channel state information reference signal, and the number of constituent elements of each vector in the second group of vectors is determined by the number of the precoding matrix. Based on the preceding embodiments of the present application, the precoding reporting unit in the state reporting module 303 is configured to report a first part of coefficients of the first coefficients, where a correspondence exists between the first part of coefficients and the first group of vectors or the second group of vectors.

Based on the preceding embodiments of the present application, the precoding reporting unit in the state reporting module 303 is configured to report the first part of coefficients of the first coefficients, where the first coefficients are divided into P groups of coefficients, the first part of coefficients includes at least one group of coefficients among the P groups of coefficients, and P is a positive integer.

Based on the preceding embodiments of the present application, in the apparatus, the first part of coefficients is indicated by the base station or the terminal in groups, which includes indicating an index number of a group corresponding to the first part of coefficients.

Based on the preceding embodiments of the present application, in the apparatus, the first part of coefficients is indicated by the base station or the terminal in groups, which includes indicating the number of groups corresponding to the first part of coefficients.

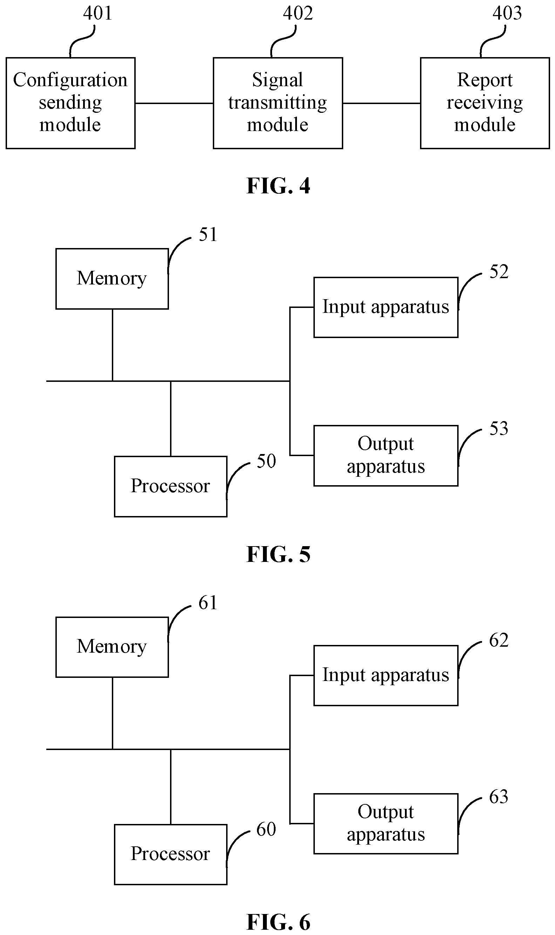

FIG. 4 is a structural diagram of a channel state information receiving apparatus according to an embodiment of the present application. The apparatus may perform the channel state information receiving method according to any embodiment of the present application and has function modules and beneficial effects corresponding to the performed method. The apparatus may be implemented by software and/or hardware. As shown in FIG. 4, the apparatus according to the embodiment of the present application includes a configuration sending module 401, a signal transmitting module 402 and a report receiving module 403.

The configuration sending module 401 is configured to send configuration information of a channel state information reference signal and configuration information for reporting channel state information.

The signal transmitting module 402 is configured to send the channel state information reference signal according to the configuration information of the channel state information reference signal. The report receiving module 403 is configured to receive the channel state information reported according to the configuration information for reporting the channel state information and based on a measurement of the channel state information reference signal.

In embodiments of the present application, the configuration sending module 401 sends the configuration information of the channel state information reference signal and the configuration information for reporting the channel state information, the signal transmitting module 402 sends the channel state information reference signal according to the configuration information of the channel state information reference signal, and the report receiving module 403 receives the channel state information reported according to the configuration information for reporting the channel state information and the measurement of the channel state information reference signal so that the channel state information is accurately reported, resources occupied for transmitting the channel state information can be reduced, and a utilization rate of data transmission resources can be improved.

Based on the preceding embodiments of the present application, in the apparatus, the channel state information includes a precoding matrix, and the number of antenna ports to which the precoding matrix is applied is greater than the number of antenna ports for the channel state information reference signal, where a correspondence exists between the antenna ports for the channel state information reference signal and the antenna ports to which the precoding matrix is applied, and the correspondence is indicated through configuration information.

Based on the preceding embodiments of the present application, in the apparatus, the correspondence indicates a manner for generating indication information of the precoding matrix. Based on the preceding embodiments of the present application, the report receiving module 403 includes a matrix receiving unit configured to receive feedback of coefficients of X1 vectors, where the number of constituent elements of each of the X1 vectors is the number of antenna ports for the channel state information reference signal, X1 is an integer greater than or equal to 1, and the coefficients of the X1 vectors indicate the precoding matrix.

Based on the preceding embodiments of the present application, the matrix receiving unit in the report receiving module 403 is configured to receive feedback of coefficients of X2 vectors, where the number of constituent elements of each of the X2 vectors is the number of antenna ports to which the precoding matrix is applied, X2 is an integer greater than or equal to 1, and the coefficients of the X2 vectors indicate the precoding matrix.

Based on the preceding embodiments of the present application, in the apparatus, the channel state information includes the precoding matrix, and the number of antenna ports to which the precoding matrix is applied is equal to the number of antenna ports for the channel state information reference signal, where the number is denoted as Nt, and Nt is an integer greater than or equal to 1.

Based on the preceding embodiments of the present application, the matrix receiving unit in the report receiving module 403 is configured to receive feedback of channel states of Np antenna ports, where the Np antenna ports are selected by a terminal from Nt antenna ports for the channel state information reference signal, Np is an integer greater than or equal to 1, and Np is less than Nt.

Based on the preceding embodiments of the present application, the apparatus further includes a restoration module configured to restore, based on the channel states of the Np antenna ports, the precoding matrix applied to Nt antenna ports.

Based on the preceding embodiments of the present application, the matrix receiving unit in the report receiving module 403 is configured to perform the operation below.

Feedback of coefficients of X1 vectors is received, where the number of constituent elements of each of the X1 vectors is Np, and X1 is a positive integer.

Based on the preceding embodiments of the present application, the antenna ports for the channel state information reference signal are divided into two parts, a first part of antenna ports is transmitted on a channel state information reference signal resource with non-zero power, and a second part of antenna ports is transmitted on the channel state information reference signal resource with zero power.

Based on the preceding embodiments of the present application, the antenna ports for the channel state information reference signal are divided into two parts, the first part of antenna ports occupies a time-frequency resource on the channel state information reference signal resource, and the second part of antenna ports occupies no time-frequency resource on the channel state information reference signal resource.

Based on the preceding embodiments of the present application, the matrix receiving unit in the report receiving module 403 is configured to perform the operation below.

The precoding matrix is received which is applied to antenna ports the number of which is equal to the number of antennas for the channel state information reference signal and is fed back according to a measurement of the channel state information reference signal transmitted through the first part of antenna ports.

Based on the preceding embodiments of the present application, the antenna ports are indicated in at least one of the manners below.

An index number of the first part of antenna ports is indicated; an index number of the second part of antenna ports is indicated; a mapping relationship between the first part of antenna ports and the antenna ports to which the precoding matrix is applied is indicated; or a mapping relationship between the second part of antenna ports and the antenna ports to which the precoding matrix is applied is indicated.

Based on the preceding embodiments of the present application, the channel state information includes the precoding matrix, and the number of antenna ports to which the precoding matrix is applied is less than the number of antenna ports for the channel state information reference signal. Based on the preceding embodiments of the present application, the antenna ports to which the precoding matrix is applied are indicated from the antenna ports for the channel state information reference signal.

Based on the preceding embodiments of the present application, the antenna ports to which the precoding matrix is applied are indicated by the terminal from the antenna ports for the channel state information reference signal.

Based on the preceding embodiments of the present application, the channel state information includes the precoding matrix generated by mapping a vector matrix A, where the vector matrix A is formed by first coefficients in combination with a first group of vectors and a second group of vectors.

Based on the preceding embodiments of the present application, the first group of vectors and the second group of vectors each include at least one vector, and the vectors in the first group of vectors have the same number of constituent elements and/or the vectors in the second group of vectors have the same number of constituent elements.

Based on the preceding embodiments of the present application, the number is determined in at least one of the following manners: being indicated by a base station or being selected by the terminal.

Based on the preceding embodiments of the present application, the number is indicated in the manner below.

The number is a product of a second coefficient indicated and the number of antenna ports for the channel state information reference signal.

Based on the preceding embodiments of the present application, the number is indicated by the terminal in at least one of the manners below.

The number is a value selected according to an indication of the terminal from candidate values set by the base station. The number is a product of a third coefficient indicated by the terminal and the number of antenna ports for the channel state information reference signal.

Based on the preceding embodiments of the present application, a mapping relationship exists between constituent elements of each vector in the first group of vectors and the antenna ports for the channel state information reference signal, and the mapping relationship is determined by at least one of the methods below. The mapping relationship is indicated by the base station. The mapping relationship is selected by the terminal. The mapping relationship is set via a protocol. Based on the preceding embodiments of the present application, a mapping relationship exists between constituent elements of each vector in the second group of vectors and index numbers of the precoding matrix or frequency domain units to which the precoding matrix is applied, and the mapping relationship is determined by at least one of the methods below. The mapping relationship is indicated by the base station. The mapping relationship is selected by the terminal. The mapping relationship is set via a protocol.

Based on the preceding embodiments of the present application, the number of constituent elements of each vector in the first group of vectors is determined by the number of antenna ports for the channel state information reference signal, and the number of constituent elements of each vector in the second group of vectors is determined by the number of the precoding matrix. Based on the preceding embodiments of the present application, the matrix receiving unit in the report receiving module 403 is configured to receive a reported first part of coefficients of the first coefficients, where a correspondence exists between the first part of coefficients and the first group of vectors or the second group of vectors.

Based on the preceding embodiments of the present application, the matrix receiving unit in the report receiving module 403 is configured to receive the reported first part of coefficients of the first coefficients, where the first coefficients are divided into P groups of coefficients, the first part of coefficients includes at least one group of coefficients among the P groups of coefficients, and P is a positive integer.

Based on the preceding embodiments of the present application, the first part of coefficients is indicated by the base station or the terminal in groups, which includes indicating the number of groups corresponding to the first part of coefficients.

Based on the preceding embodiments of the present application, the first part of coefficients is indicated by the base station or the terminal in groups, which includes indicating an index number of a group corresponding to the first part of coefficients.

FIG. 5 is a structural diagram of a terminal according to an embodiment of the present application. The terminal includes a processor 50 and a memory 51. One or more processors 50 may be provided in the terminal, and one processor 50 is shown as an example in FIG. 5. The processor 50 and the memory 51 in the terminal may be connected via a bus or in other manners. In FIG. 5, the connection via a bus is shown as an example.

As a computer-readable storage medium, the memory 51 may be configured to store software programs, computer-executable programs and modules, such as programs corresponding to the channel state information reporting method in any one of the embodiments of the present application and modules corresponding to the transmission apparatus in the embodiments of the present application (the configuration receiving module 301, the signal receiving module 302 and the state reporting module 303). The processor 50 executes software programs, instructions and modules stored in the memory 51 to perform functions and data processing of an electronic device, that is, to perform the preceding channel state information reporting method.

The memory 51 may mainly include a program storage region and a data storage region. The program storage region may store an operating system and a program required by at least one function. The data storage region may store data created based on the use of the electronic device. Additionally, the memory 51 may include a high-speed random-access memory and may also include a nonvolatile memory, such as at least one magnetic disk memory, a flash memory or another nonvolatile solid-state memory. In some examples, the memory 51 may include memories that are remotely disposed relative to the processor 50, and these remote memories may be connected to the electronic device via a network. Examples of the preceding network include, but are not limited to, the Internet, an intranet, a local area network, a mobile communication network and a combination thereof.

An input apparatus 52 may be configured to receive inputted digital or character information and generate key signal input related to user settings and function control of the electronic device. An output apparatus 53 may include a display device such as a display screen.

FIG. 6 is a structural diagram of a base station according to an embodiment of the present application. The base station includes a processor 60 and a memory 61. One or more processors 60 may be provided in the base station, and one processor 60 is shown as an example in FIG. 6. The processor 60 and the memory 61 in the base station may be connected via a bus or in other manners. In FIG. 6, the connection via a bus is shown as an example.

As a computer-readable storage medium, the memory 61 may be configured to store software programs, computer-executable programs and modules, such as programs corresponding to the channel state information reporting method in any one of the embodiments of the present application and modules corresponding to the transmission apparatus in the embodiments of the present application (the configuration sending module 401, the signal transmitting module 402 and the report receiving module 403). The processor 60 executes software programs, instructions and modules stored in the memory 61 to perform functions and data processing of an electronic device, that is, to perform the preceding channel state information reporting method.

The memory 61 may mainly include a program storage region and a data storage region. The program storage region may store an operating system and a program required by at least one function. The data storage region may store data created based on the use of the electronic device. Additionally, the memory 61 may include a high-speed random-access memory and may also include a nonvolatile memory, such as at least one magnetic disk memory, a flash memory or another nonvolatile solid-state memory. In some examples, the memory 61 may include memories that are remotely disposed relative to the processor 60, and these remote memories may be connected to the electronic device via a network. Examples of the preceding network include, but are not limited to, the Internet, an intranet, a local area network, a mobile communication network and a combination thereof.

An input apparatus 62 may be configured to receive inputted digital or character information and generate key signal input related to user settings and function control of the electronic device. An output apparatus 63 may include a display device such as a display screen.

Embodiments of the present application further provide a storage medium including computer-executable instructions. In an embodiment, when executed by a computer processor, the computer-executable instructions are used for performing a channel state information reporting method. The channel state information reporting method includes acquiring configuration information of a channel state information reference signal and configuration information for reporting channel state information; receiving the channel state information reference signal according to the configuration information of the channel state information reference signal; and reporting the channel state information according to the configuration information for reporting the channel state information and based on a measurement of the channel state information reference signal.

In an embodiment, when executed by a computer processor, the computer-executable instructions are used for performing a channel state information receiving method. The channel state information receiving method includes sending configuration information of a channel state information reference signal and configuration information for reporting channel state information; sending the channel state information reference signal according to the configuration information of the channel state information reference signal; and receiving the channel state information reported according to the configuration information for reporting the channel state information and based on a measurement of the channel state information reference signal.

From the preceding description of embodiments, it is apparent to those skilled in the art that the present application may be implemented by software plus necessary general-purpose hardware or may be implemented by hardware. The technical solutions of the present application may be substantially embodied in the form of a software product. The software product in a computer may be stored in a computer-readable storage medium such as a floppy disk, a read-only memory (ROM), a random-access memory (RAM), a flash memory, a hard disk or an optical disk in the computer and includes instructions for enabling a computer device (which may be a personal computer, a server or a network device) to perform the method in the embodiments of the present application.

Units and modules included in the embodiments of the preceding apparatus are divided according to functional logic, and the division is not limited to this as long as the corresponding functions can be implemented. Additionally, the names of function units are intended for distinguishing between each other and are not to limit the scope of the present application.

It is to be understood by those having ordinary skill in the art that some or all steps of the preceding method and function modules/units in the preceding apparatus or device may be implemented as software, firmware, hardware and suitable combinations thereof.

In the hardware implementation, the division of the preceding function modules/units may not correspond to the division of physical components. For example, one physical component may have multiple functions, or one function or step may be performed jointly by multiple physical components. Some or all physical components may be implemented as software executed by a processor such as a central processing unit, a digital signal processor or a microprocessor, may be implemented as hardware, or may be implemented as integrated circuits such as application-specific integrated circuits. The corresponding software may be distributed on computer-readable media. The computer-readable media may include computer storage media (or non-transitory media) and communication media (or transitory media). As is known to those having ordinary skill in the art, the term computer storage media include volatile and nonvolatile media as well as removable and non-removable media implemented in any method or technology for storing information (such as computer-readable instructions, data structures, program modules or other data). The computer storage media include, but are not limited to, a RAM, a ROM, an electrically erasable programmable read-only memory (EEPROM), a flash memory or other memory technologies, a compact disc read-only memory (CD-ROM), a digital video disc (DVD) or other optical storages, a magnetic cassette, a magnetic tape, a magnetic disk or other magnetic storage devices, or any other medium that is used for storing desired information and that can be accessed by a computer. Additionally, as is known to those having ordinary skill in the art, the communication media generally include computer-readable instructions, data structures, program modules or other data in carriers or in modulated data signals transported in other transport mechanisms and may include any information delivery medium.

## Claims

1. A channel state information reporting method, the method being applied by a terminal and comprising:
acquiring configuration information of a channel state information reference signal and configuration information for reporting channel state information;
receiving the channel state information reference signal according to the configuration information of the channel state information reference signal; and
reporting the channel state information according to the configuration information for reporting the channel state information and based on a measurement of the channel state information reference signal.

2. The method of claim 1, wherein the channel state information comprises a precoding matrix, and a number of antenna ports to which the precoding matrix is applied is greater than a number of antenna ports for the channel state information reference signal, wherein a correspondence exists between the antenna ports for the channel state information reference signal and the antenna ports to which the precoding matrix is applied, and the correspondence is indicated through configuration information.

3. The method of claim 2, wherein the correspondence indicates a manner for generating indication information of the precoding matrix.

4. The method of claim 2, wherein reporting the precoding matrix comprises:
feeding back coefficients of X1 vectors, wherein a number of constituent elements of each of the X1 vectors is the number of antenna ports for the channel state information reference signal, X1 is an integer greater than or equal to 1, and the coefficients of the X1 vectors indicate the precoding matrix.

5. The method of claim 2, wherein reporting the precoding matrix comprises:
feeding back coefficients of X2 vectors, wherein a number of constituent elements of each of the X2 vectors is the number of antenna ports to which the precoding matrix is applied, X2 is an integer greater than or equal to 1, and the coefficients of the X2 vectors indicate the precoding matrix.

6. The method of claim 1, wherein the channel state information comprises a precoding matrix, and a number of antenna ports to which the precoding matrix is applied is equal to a number of antenna ports for the channel state information reference signal, wherein the number is denoted as Nt, and Nt is an integer greater than or equal to 1.

7. The method of claim 6, wherein reporting the precoding matrix comprises:
selecting Np antenna ports from Nt antenna ports for the channel state information reference signal, and feeding back channel states of the Np antenna ports, wherein Np is an integer greater than or equal to 1, and Np is less than Nt.

8. The method of claim 7, wherein the Np antenna ports selected from the Nt antenna ports for the channel state information reference signal indicate a manner for a base station side to restore the precoding matrix applied to Nt antenna ports.

9. The method of claim 7, wherein feeding back the channel states of the Np antenna ports comprises:
feeding back coefficients of X1 vectors, wherein a number of constituent elements of each of the X1 vectors is Np, and X1 is a positive integer.

10. The method of claim 1, wherein antenna ports for the channel state information reference signal are divided into two parts, a first part of antenna ports is transmitted on a channel state information reference signal resource with non-zero power, and a second part of antenna ports is transmitted on the channel state information reference signal resource with zero power.

11. The method of claim 1, wherein antenna ports for the channel state information reference signal are divided into two parts, a first part of antenna ports occupies a time-frequency resource on a channel state information reference signal resource, and a second part of antenna ports occupies no time-frequency resource on the channel state information reference signal resource.

12. The method of claim 10 or 11, wherein reporting the channel state information comprises:
according to a measurement of the channel state information reference signal transmitted through the first part of antenna ports, feeding back a precoding matrix applied to antenna ports, wherein the number of the antenna ports is equal to a number of antenna ports for the channel state information reference signal.

13. The method of claim 10 or 11, wherein the antenna ports are indicated by a base station in at least one of the following manners:
an index number of the first part of antenna ports is indicated by the base station;
an index number of the second part of antenna ports is indicated by the base station;
a mapping relationship between the first part of antenna ports and antenna ports to which a precoding matrix is applied is indicated by the base station; or
a mapping relationship between the second part of antenna ports and antenna ports to which a precoding matrix is applied is indicated by the base station.

14. The method of claim 1, wherein the channel state information comprises a precoding matrix, and a number of antenna ports to which the precoding matrix is applied is less than a number of antenna ports for the channel state information reference signal.

15. The method of claim 14, wherein the antenna ports to which the precoding matrix is applied are indicated by a base station from the antenna ports for the channel state information reference signal.

16. The method of claim 14, wherein the antenna ports to which the precoding matrix is applied are indicated by the terminal from the antenna ports for the channel state information reference signal.

17. The method of claim 1, wherein the channel state information comprises a precoding matrix generated by mapping a vector matrix A, wherein the vector matrix A is formed by first coefficients in combination with a first group of vectors and a second group of vectors.

18. The method of claim 17, wherein each of the first group of vectors and the second group of vectors comprises at least one vector and satisfies at least one of the following: the vectors in the first group of vectors have a same number of constituent elements or the vectors in the second group of vectors have a same number of constituent elements.

19. The method of claim 18, wherein the number is determined in at least one of the following manners:
being indicated by a base station or being selected by the terminal.

20. The method of claim 19, wherein the number is indicated by the base station in the following manner:
the number is a product of a second coefficient indicated by the base station and a number of antenna ports for the channel state information reference signal.

21. The method of claim 19, wherein the number is indicated by the terminal in at least one of the following manners:
the number is a value selected according to an indication of the terminal from candidate values set by the base station; or
the number is a product of a third coefficient indicated by the terminal and a number of antenna ports for the channel state information reference signal.

22. The method of claim 17, wherein a mapping relationship exists between constituent elements of each vector in the first group of vectors and antenna ports for the channel state information reference signal, and the mapping relationship is determined by at least one of the following methods:
the mapping relationship is indicated by a base station;
the mapping relationship is selected by the terminal; or
the mapping relationship is set via a protocol.

23. The method of claim 17, wherein a mapping relationship exists between constituent elements of each vector in the second group of vectors and index numbers of the precoding matrix or frequency domain units to which the precoding matrix is applied, and the mapping relationship is determined by at least one of the following methods:
the mapping relationship is indicated by a base station;
the mapping relationship is selected by the terminal; or
the mapping relationship is set via a protocol.

24. The method of claim 17, wherein a number of constituent elements of each vector in the first group of vectors is determined by a number of antenna ports for the channel state information reference signal, and a number of constituent elements of each vector in the second group of vectors is determined by a number of the precoding matrixs.

25. The method of claim 17, wherein reporting the precoding matrix comprises:
reporting a first part of coefficients of the first coefficients, wherein a correspondence exists between the first part of coefficients and the first group of vectors or the second group of vectors.

26. The method of claim 17, wherein the channel state information comprises the precoding matrix, and reporting the precoding matrix comprises:
reporting a first part of coefficients of the first coefficients, wherein the first coefficients are divided into P groups of coefficients, the first part of coefficients comprises at least one group of coefficients among the P groups of coefficients, and P is a positive integer.

27. The method of claim 26, wherein the first part of coefficients is indicated by a base station or the terminal in groups, which comprises indicating an index number of a group corresponding to the first part of coefficients.

28. The method of claim 26, wherein the first part of coefficients is indicated by a base station or the terminal in groups, which comprises indicating a number of groups corresponding to the first part of coefficients.

29. A channel state information receiving method, the method being applied by a base station and comprising:
sending configuration information of a channel state information reference signal and configuration information for reporting channel state information;
sending the channel state information reference signal according to the configuration information of the channel state information reference signal; and
receiving the channel state information reported according to the configuration information for reporting the channel state information and based on a measurement of the channel state information reference signal.

30. A terminal, comprising:
at least one processor; and
a memory configured to store at least one program;
wherein the at least one program, when executed by the at least one processor, causes the at least one processor to perform the channel state information reporting method of any one of claims 1 to 28.

31. A base station, comprising:
at least one processor; and
a memory configured to store at least one program;
wherein the at least one program, when executed by the at least one processor, causes the at least one processor to perform the channel state information receiving method of claim 29.

32. A computer-readable storage medium, which is configured to store at least one program, wherein the at least one program is executed by at least one processor to implement the method of any one of claims 1 to 29.
